# FASCICULE DE BREVET EUROPEEN

(11) **EP 4 225 711 B1**
(45) Date de publication et mention de la délivrance du brevet: **20.03.2024**
(21) Numéro de dépôt: 21801157.5
(22) Date de dépôt: 06.10.2021
(51) Int. Cl.: C03C 17/36, C03C 27/06, C03C 27/10, C03B 23/023, C03B 40/033, B32B 17/00, B32B 17/10

(54) **PROCEDE D'OBTENTION D'UN VITRAGE BOMBE FEUILLETE**
VERFAHREN ZUR HERSTELLUNG EINER GEKRÜMMTEN LAMINIERTEN VERGLASUNG
METHOD FOR OBTAINING CURVED LAMINATED GLAZING

(30) Priorité: 09.10.2020 FR 2010349
(43) Date de publication de la demande: 16.08.2023
(73) Titulaire: Saint-Gobain Glass France, 92400 Courbevoie (FR)
(72) Inventeur: FLAMARY-MESPOULIE, Florian, 60200 COMPIEGNE (FR)
(74) Mandataire: Saint-Gobain Recherche
(86) Numéro de dépôt international: PCT/FR2021/051735
(87) Numéro de publication internationale: WO 2022/074333

(56) Documents cités:
- WO-A1-2009/026275
- WO-A1-2014/093568
- DE-C1- 4 316 575

## Description

L'invention se rapporte au domaine des vitrages bombés feuilletés pour véhicules automobiles, par exemple pour toits ou pare-brise, comprenant une feuille de verre revêtue d'un empilement de couches minces et d'une couche d'émail.

Les vitrages feuilletés sont des vitrages dans lesquels deux feuilles de verre sont liées adhésivement au moyen d'un intercalaire de feuilletage. Ce dernier permet en particulier de retenir les éclats de verre en cas de casse, mais apporte aussi d'autres fonctionnalités, en particulier en termes de résistance à l'effraction ou d'amélioration des propriétés acoustiques.

Ces vitrages comprennent souvent des revêtements de divers types, destinés à conférer différentes propriétés.

Des couches d'émail, généralement noir et opaque, sont souvent déposées sur une partie du vitrage, habituellement sous forme d'une bande périphérique destinée à dissimuler et protéger contre le rayonnement ultraviolet les joints polymériques servant à la fixation et au positionnement du vitrage sur la baie de carrosserie. Des zones émaillées dissimulent également les zones de fixation du rétroviseur intérieur et de différents connecteurs et capteurs.

Dans un vitrage feuilleté, ces couches d'émail sont généralement disposées en face 2, les faces étant traditionnellement numérotées à partir de la face destinée à être positionnée à l'extérieur du véhicule. La face 2 est donc une face en contact avec l'intercalaire de feuilletage. L'aspect esthétique de la couche d'émail vue depuis l'extérieur du véhicule revêt une importance particulière pour les constructeurs automobiles. L'émail est généralement obtenu par cuisson au-dessus de 500°C d'une composition comprenant une fritte de verre et des pigments. Une fritte de verre se compose de fines particules d'un verre à bas point de fusion, qui sous l'effet d'un traitement thermique de cuisson se ramollit et adhère à la feuille de verre. On forme ainsi une couche minérale, généralement opaque, à forte résistance chimique et mécanique, adhérant parfaitement au verre en maintenant les particules de pigment. L'étape de cuisson est généralement réalisée simultanément avec le bombage de la feuille de verre.

Dans le contexte de la fabrication de vitrage feuilleté, les deux feuilles de verre du vitrage sont bombées ensemble, la feuille de verre destinée à être positionnée à l'intérieur du véhicule étant généralement disposée au-dessus de l'autre feuille de verre, qui porte l'émail. Il est alors nécessaire que l'émail possède des propriétés antiadhésives afin d'empêcher tout collage entre les deux feuilles de verre durant le bombage. Pour ce faire, on emploie habituellement des émaux contenant du bismuth, c'est-à-dire obtenus à partir de frittes de verre contenant de l'oxyde de bismuth.

Des revêtements, généralement sous forme d'empilements de couches minces, peuvent aussi être présents sur une des feuilles de verre du vitrage feuilleté. Il peut notamment s'agir de couches électroconductrices, lesquelles peuvent apporter deux types de fonctionnalités. Les couches électroconductrices peuvent d'une part, lorsque des amenées de courant sont prévues, dissiper de la chaleur par effet Joule. Il s'agit alors de couches chauffantes, utiles par exemple pour le dégivrage ou le désembuage. Ces couches présentent d'autre part, de par leur réflexion du rayonnement infrarouge, des propriétés de contrôle solaire ou de faible émissivité. Les couches sont alors appréciées pour l'amélioration du confort thermique ou pour les économies d'énergie qu'elles apportent, en diminuant la consommation destinée au chauffage ou à la climatisation. Ces empilements de couches sont généralement disposés en face 3 du vitrage feuilleté, donc également en contact avec l'intercalaire de feuilletage. La demande WO 2014/093568 A1 divulgue un procédé de réalisation de structure en verre multicouche.

Il peut toutefois être intéressant, dans certains cas qui seront détaillés par la suite, de disposer la couche d'émail et l'empilement de couches minces sur la même feuille de verre, et donc sur la même face de la feuille de verre en question afin que ces revêtements soient protégés à l'intérieur du vitrage feuilleté.

Il a toutefois été observé que lorsqu'une feuille de verre revêtue d'un empilement de couches minces devait être pourvue d'une couche d'émail, des interactions indésirables pouvaient se produire lors du bombage entre l'empilement et l'émail, conduisant notamment à une dégradation de l'aspect esthétique de l'émail. Il a notamment été observé, en particulier lorsque l'empilement contenait au moins une couche de nitrure et que l'émail contenait du bismuth, que des bulles se créaient au sein de l'émail, près de l'interface entre ce dernier et l'empilement, occasionnant une baisse significative d'adhésion de l'émail, modifiant son aspect optique (en particulier la couleur côté verre, c'est-à-dire du côté opposé à l'émail) et réduisant sa résistance chimique, en particulier aux acides.

Plusieurs solutions ont été proposées à ce problème. Il est possible de retirer au préalable l'empilement de couches minces aux endroits où la couche d'émail doit être déposée, par exemple au moyen d'abrasifs, afin que l'émail soit déposé au contact direct de la feuille de verre et d'éviter tous problèmes d'adhésion entre la couche d'émail et l'empilement de couches minces. L'abrasion mécanique génère toutefois des rayures visibles, y compris au niveau de la couche d'émail.

La demande WO 2014/133929, et avant elle la demande WO0029346 ont proposé l'idée d'utiliser pour l'émail des frittes de verre spéciales capables lors de la cuisson ou d'une pré-cuisson de dissoudre l'empilement de couches minces pour se fixer directement au verre. De tels émaux ne possèdent toutefois pas de bonnes propriétés antiadhésives, entraînant durant le bombage un collage des deux feuilles de verre entre elles.

La demande WO 2019/106264 propose quant à elle de modifier l'empilement de couches minces en ajoutant une couche d'oxyde entre l'empilement et l'émail comprenant du bismuth. Il n'est toutefois pas toujours possible de procéder à une telle modification.

L'invention a pour but d'obvier à ces inconvénients.

A cet effet, l'invention a pour objet un procédé d'obtention d'un vitrage bombé feuilleté, notamment pour pare-brise ou toit de véhicule automobile, comprenant les étapes suivantes :
a. la fourniture d'une première feuille de verre, revêtue sur au moins une partie d'une de ses faces d'un empilement de couches minces
b. une étape de dépôt, sur une partie de la surface de l'empilement de couches minces, d'une couche d'émail
c. une étape de dépôt, au moins sur ladite couche d'émail, de particules réfractaires à base d'oxydes, de carbures ou de métaux dont au moins une dimension est supérieure ou égale à 30 µm,
d. une étape de bombage simultané de la première feuille de verre avec une feuille de verre supplémentaire, la couche d'émail étant tournée vers ladite feuille de verre supplémentaire,
e. une étape de feuilletage de ladite première feuille de verre avec la feuille de verre supplémentaire au moyen d'un intercalaire de feuilletage, de sorte que la couche d'émail soit tournée vers ledit intercalaire,
ledit procédé comprenant en outre une étape de pré-cuisson de la couche d'émail durant laquelle l'empilement de couches minces situé sous la couche d'émail est au moins partiellement dissout par ladite couche d'émail, ladite étape de pré-cuisson étant soit une étape appelée b1 et réalisée entre l'étape b et l'étape c, soit une étape appelée c1 et réalisée entre l'étape c et l'étape d, l'empilement de couches minces situé sous la couche d'émail étant totalement dissout par ladite couche d'émail au moins à l'issue de l'étape d.

L'invention a aussi pour objet un vitrage bombé feuilleté, notamment pour pare-brise ou toit de véhicule automobile, obtenu ou susceptible d'être obtenu par ce procédé.

La dissolution de l'empilement de couches minces par l'émail permet d'éviter les interactions susmentionnées. Les éléments constitutifs de l'empilement se trouvent dissous dans la couche d'émail, laquelle se trouve, au moins à l'issue de l'étape de bombage (étape d), au contact direct de la feuille de verre. L'utilisation de particules réfractaires (déposées à l'étape c) permet quant à elle d'éviter tout collage entre les deux feuilles de verre lors du bombage.

Dans le présent texte, l'empilement de couches minces et la couche d'émail sont qualifiés collectivement « les revêtements ».

### Etape a

La première feuille de verre peut être plane ou bombée. La première feuille de verre est généralement plane au moment du dépôt de l'empilement de couches minces puis de la couche d'émail, et est ensuite bombée lors de l'étape d. La première feuille de verre est donc bombée dans le vitrage feuilleté bombé selon l'invention.

Le verre de la première feuille de verre est typiquement un verre silico-sodo-calcique, mais d'autres verres, par exemple des borosilicates ou des aluminosilicates peuvent également être employés. La première feuille de verre est de préférence obtenue par flottage, c'est-à-dire par un procédé consistant à déverser du verre fondu sur un bain d'étain en fusion.

La première feuille de verre peut être en verre clair ou en verre teinté, de préférence en verre teinté, par exemple en vert, gris ou bleu. Pour ce faire, la composition chimique de la première feuille de verre comprend avantageusement de l'oxyde de fer, en une teneur pondérale allant de 0,5 à 2%. Elle peut également comprendre d'autres agents colorants, tels que l'oxyde de cobalt, l'oxyde de chrome, l'oxyde de nickel, l'oxyde d'erbium, ou encore le sélénium.

La première feuille de verre présente de préférence une épaisseur comprise dans un domaine allant de 0,7 à 19 mm, notamment de 1 à 10 mm, particulièrement de 2 à 6 mm, voire de 2 à 4 mm.

Les dimensions latérales de la première feuille de verre (et de la feuille de verre supplémentaire) sont à adapter en fonction de celles du vitrage feuilleté auquel elle est destinée à être intégrée. La première feuille de verre (et/ou la feuille de verre supplémentaire) présente de préférence une surface d'au moins 1 m².

La première feuille de verre est de préférence revêtue de l'empilement de couches minces sur au moins 70%, notamment sur au moins 90%, voire sur la totalité de la surface de la face de la feuille de verre. Certaines zones peuvent en effet ne pas être revêtues afin notamment de ménager des fenêtres de communication laissant passer les ondes.

L'empilement est de préférence revêtu par la couche d'émail sur 2 à 40%, notamment 3 à 30%, voire 5 à 20% de sa surface. La couche d'émail comprend de préférence une bande périphérique, c'est-à-dire une bande refermée sur elle-même qui, de chaque point de la périphérie de la première feuille de verre, s'étend vers l'intérieur de la première feuille de verre sur une certaine largeur, typiquement comprise entre 1 et 20 cm.

L'empilement de couches minces est de préférence au contact de la feuille de verre. Lors de son dépôt, la couche d'émail est de préférence au contact de l'empilement de couches minces.

Par « contact », on entend dans le présent texte un contact physique. Par l'expression « à base de » on entend de préférence le fait que la couche en question comprend au moins 50% en poids du matériau considéré, notamment 60%, voire 70% et même 80% ou 90%. La couche peut même essentiellement consister ou consister en ce matériau. Par « essentiellement consister », il faut comprendre que la couche peut comprendre des impuretés sans influence sur ses propriétés. Les termes « oxyde » ou « nitrure » ne signifient pas nécessairement que les oxydes ou nitrures sont stœchiométriques. Ils peuvent en effet être sous-stœchiométriques, sur-stœchiométriques ou stœchiométriques.

L'empilement comprend de préférence au moins une couche à base d'un nitrure. Le nitrure est notamment un nitrure d'au moins un élément choisi parmi l'aluminium, le silicium, le zirconium, le titane. Elle peut comprendre un nitrure d'au moins deux ou trois de ces éléments, par exemple un nitrure de silicium et de zirconium, ou un nitrure de silicium et d'aluminium. De façon préférée, la couche à base d'un nitrure est une couche à base de nitrure de silicium, plus particulièrement une couche consistant essentiellement en un nitrure de silicium. Lorsque la couche de nitrure de silicium est déposée par pulvérisation cathodique elle contient généralement de l'aluminium, car il est d'usage de doper les cibles de silicium par de l'aluminium afin d'accélérer les vitesses de dépôt.

La couche à base d'un nitrure présente de préférence une épaisseur physique comprise dans un domaine allant de 2 à 100 nm, notamment de 5 à 80 nm.

Les couches à base de nitrure sont couramment employées dans nombre d'empilements de couches minces car elles possèdent des propriétés de blocage avantageuses, en ce sens qu'elles évitent l'oxydation d'autres couches présentes dans l'empilement, notamment des couches fonctionnelles qui seront décrites ci-après.

L'empilement comprend de préférence au moins une couche fonctionnelle, notamment une couche fonctionnelle électro-conductrice. La couche fonctionnelle est de préférence comprise entre deux couches minces diélectriques, dont une au moins est une couche à base de nitrure. D'autres couches diélectriques possibles sont par exemple des couches d'oxydes ou d'oxynitrures.

Au moins une couche fonctionnelle électro-conductrice est avantageusement choisie parmi :
- les couches métalliques, notamment en argent ou en niobium, voire en or, et
- les couches d'un oxyde transparent conducteur, notamment choisi parmi l'oxyde d'indium et d'étain, les oxydes d'étain dopés (par exemple au fluor ou à l'antimoine), les oxydes de zinc dopés (par exemple à l'aluminium ou au gallium).

Ces couches sont particulièrement appréciées pour leur faible émissivité, qui confère aux vitrages d'excellentes propriétés d'isolation thermique. Dans les vitrages équipant les véhicules terrestres, notamment automobiles, ferroviaires, ou encore les véhicules aériens ou maritimes, les vitrages bas-émissifs permettent par temps chaud de réfléchir vers l'extérieur une partie du rayonnement solaire, et donc de limiter l'échauffement de l'habitacle desdits véhicules, et le cas échéant de réduire les dépenses de climatisation. A l'inverse, par temps froid, ces vitrages permettent de conserver la chaleur au sein de l'habitacle, et par conséquent de réduire l'effort énergétique de chauffage. Il en est de même dans le cas des vitrages équipant les bâtiments.

Selon un mode de réalisation préféré, l'empilement de couches minces comprend au moins une couche d'argent, notamment une, deux ou trois, voire quatre couches d'argent. L'épaisseur physique de la couche d'argent ou le cas échéant la somme des épaisseurs des couches d'argent est de préférence comprise entre 2 et 20 nm, notamment entre 3 et 15 nm.

Selon un autre mode de réalisation préféré, l'empilement de couches minces comprend au moins une couche d'oxyde d'indium et d'étain. Son épaisseur physique est de préférence comprise entre 30 et 200 nm, notamment entre 40 et 150 nm.

Afin de protéger la ou chaque couche mince électroconductrice (qu'elle soit métallique ou à base d'oxyde transparent conducteur) durant l'étape de bombage, chacune de ces couches est de préférence encadrée par au moins deux couches diélectriques. Les couches diélectriques sont de préférence à base d'oxyde, de nitrure et/ou d'oxynitrure d'au moins un élément choisi parmi le silicium, l'aluminium, le titane, le zinc, le zirconium, l'étain.

Au moins une partie de l'empilement de couches minces peut être déposée par diverses techniques connues, par exemple par dépôt chimique en phase vapeur (CVD), ou par pulvérisation cathodique, notamment assistée par champ magnétique (procédé magnétron).

L'empilement de couches minces est de préférence déposée par pulvérisation cathodique, notamment assistée par champ magnétique. Dans ce procédé, un plasma est créé sous un vide poussé au voisinage d'une cible comprenant les éléments chimiques à déposer. Les espèces actives du plasma, en bombardant la cible, arrachent lesdits éléments, qui se déposent sur la feuille de verre en formant la couche mince désirée. Ce procédé est dit « réactif » lorsque la couche est constituée d'un matériau résultant d'une réaction chimique entre les éléments arrachés de la cible et le gaz contenu dans le plasma. L'avantage majeur de ce procédé réside dans la possibilité de déposer sur une même ligne un empilement très complexe de couches en faisant successivement défiler la feuille de verre sous différentes cibles, ce généralement dans un seul et même dispositif.

Les empilements précités possèdent des propriétés de conduction de l'électricité et de réflexion de l'infrarouge utiles pour procurer une fonction de chauffage (dégivrage, désembuage) et/ou une fonction d'isolation thermique.

Lorsque l'empilement de couches minces est destiné à procurer une fonction de chauffage, des amenées de courant doivent être prévues. Il peut notamment s'agir de bandes en pâte d'argent déposées par sérigraphie sur l'empilement de couches minces, au niveau de deux bords opposés de la feuille de verre.

### Etape b

Lors de l'étape b, la couche d'émail est de préférence déposée à partir d'une composition comprenant au moins un pigment et au moins une fritte de verre. La couche d'émail ne comprend de préférence pas d'oxyde de plomb.

La composition d'émail comprend généralement en outre un médium organique, destiné à faciliter l'application de la composition sur le substrat ainsi que son adhésion temporaire à ce dernier, et qui est éliminé lors de la pré-cuisson ou de la cuisson de l'émail. Le médium comprend typiquement des solvants, des diluants, des huiles et/ou des résines.

Les pigments comprennent de préférence un ou plusieurs oxydes choisis parmi les oxydes de chrome, de cuivre, de fer, de manganèse, de cobalt, de nickel. Il peut s'agir à titre d'exemple de chromates de cuivre et/ou de fer.

De préférence la fritte de verre est à base de borosilicate de bismuth, voire à base de borosilicate de bismuth et de zinc. Afin de la rendre plus « agressive » vis-à-vis de l'empilement de couches et favoriser la dissolution de ce dernier, les teneurs en bismuth et/ou en bore sont de préférence plus élevées que celles des frittes de verre habituellement employées.

La couche d'émail est de préférence déposée par sérigraphie. Pour ce faire, on dispose sur la feuille de verre un écran de sérigraphie, lequel comprend des mailles dont certaines sont obturées, puis on dépose la composition d'émail sur l'écran, puis on applique un racle afin de forcer la composition d'émail à traverser l'écran dans les zones où les mailles de l'écran ne sont pas obturées, de manière à former une couche d'émail humide.

L'épaisseur de la couche d'émail humide est de préférence comprise entre 10 et 30 µm.

Dans le présent texte on qualifie de « composition d'émail » la composition liquide qui est utilisée pour déposer lors de l'étape b une couche d'émail humide. Le terme « couche d'émail » est utilisé pour qualifier la couche à chaque étape du procédé, aussi bien la couche humide (avant pré-cuisson, le cas échéant avant séchage) que la couche finale (après cuisson).

L'étape b est de préférence immédiatement suivie d'une étape de séchage, destinée à éliminer au moins une partie du solvant contenu dans la composition d'émail. Un tel séchage est typiquement réalisé à une température comprise entre 120 et 180°C. Un tel séchage est pratiqué avant l'étape c (dépôt des particules réfractaires) et le cas échéant avant l'étape b1 (pré-cuisson, lorsqu'elle est réalisée avant le dépôt des particules réfractaires).

### Etape c

On entend par particules réfractaires des particules qui ne subissent pas de transformation lors du bombage (étape d) .

Les particules réfractaires sont à base d'oxydes, de carbures ou de métaux.

Les oxydes sont notamment choisis parmi les oxydes métalliques simples, tels que par exemple l'oxyde d'aluminium, de titane ou encore de zirconium, et les oxydes complexes.

Les oxydes complexes sont notamment choisis parmi les silicates, les frittes de verre ou de vitrocéramique à haut point de fusion (typiquement supérieur à 750°C) ou encore les pigments inorganiques. Les pigments sont par exemple des solutions solides d'oxydes de métaux de transition (chrome, fer etc...). Ils sont notamment appelés « pigments colorés inorganiques complexes » ou CICP.

Les métaux sont par exemple choisis parmi le tungstène, le titane, le molybdène et les aciers réfractaires.

Les silicates sont notamment des silicates d'alcalino-terreux (comme des silicates de magnésium) ou des silicates d'aluminium.

Les particules réfractaires présentent au moins une dimension supérieure ou égale à 30 µm, notamment supérieure ou égale à 40 µm ou à 50 µm, voire à 60 µm ou à 70 µm. Elles peuvent même présenter au moins une dimension supérieure ou égale à 100 µm, notamment à 200 µm. Les particules peuvent être sensiblement sphériques, auquel cas la dimension en question est le diamètre. Les particules peuvent aussi être allongées, par exemple de nature fibreuse, et présenter un rapport longueur/diamètre supérieur à 3, voire à 10. Dans ce cas, le diamètre peut être inférieur à 100 µm, même à 50 µm, mais la longueur est supérieure ou égale à 100 µm, voire même à 200 µm ou 500 µm.

Il s'est avéré que des particules trop petites ne permettaient pas d'éviter un collage lors de l'étape de bombage. La nature chimique des particules est également importante pour éviter l'apparition de défauts lors du bombage. Dans un procédé classique de bombage, les feuilles de verre sont maintenues à distance en disposant entre elles une poudre intercalaire assurant un espace de quelques dizaines de micromètres, typiquement de 20 à 50 µm. La poudre intercalaire est par exemple à base de carbonate de calcium et/ou de magnésium. Très fine (autour de 5 µm), elle peut toutefois former des agglomérats d'une taille supérieure à 10 µm. A elle seule, une telle poudre à base de carbonate s'est toutefois révélée inefficace dans le cadre de la présente invention car, en plus de ne pas empêcher le collage, elle réagit avec l'émail lors de la cuisson, donnant au final une teinte grise.

Les particules réfractaires sont déposées au moins sur la couche d'émail, soit après pré-cuisson de l'émail (étape b1), soit avant pré-cuisson de l'émail (étape c1).

Les particules réfractaires peuvent n'être déposées que sur la couche d'émail. Alternativement, les particules réfractaires peuvent être déposées sur la couche d'émail et sur les zones de la première feuille de verre à proximité de la couche d'émail, voire sur toute la surface de la feuille de verre.

La quantité de particules ayant au moins une dimension supérieure ou égale à 30 µm (ou supérieure ou égale aux valeurs préférées mentionnées ci-avant) est de préférence d'au moins 0,1 g/m², notamment d'au moins 0,5 g/m². Elle est avantageusement d'au plus 10 g/m².

Les particules réfractaires peuvent être déposées seules. Alternativement, les particules réfractaires peuvent être déposées en mélange avec des éléments absorbant le rayonnement infrarouge. Ces éléments absorbants peuvent être de nature organique ou minérale. Ces éléments permettent, lors de la pré-cuisson (étape c1), d'homogénéiser la température subie dans les différentes zones de la feuille de verre et ainsi d'éviter l'apparition de défauts, par exemple de distorsions optiques, dans les zones du verre situées à proximité de l'émail. Cet effet est maximal lorsque les éléments absorbants sont déposés sur toute la surface de la feuille de verre ou au moins dans les zones de la première feuille de verre à proximité de la couche d'émail. Alternativement, les éléments absorbants peuvent n'être déposés que sur la couche d'émail. Il a été observé dans ce cas que l'émail présentait une teinte plus noire. Les éléments absorbants peuvent être une résine, qui va brûler lors de l'étape de pré-cuisson (c1). Il peut encore s'agir de particules absorbantes, telles que des pigments ou du noir de carbone. Le noir de carbone est particulièrement préféré de par sa capacité à être éliminé par combustion lors de la pré-cuisson.

Les particules réfractaires peuvent être déposées par tout moyen. Selon un mode de réalisation, les particules sont déposées par pulvérisation ou encore par saupoudrage, notamment au moyen d'un tamis. Ce cas de figure est particulièrement adapté lorsque les particules sont déposées seules. Il permet aussi de déposer des particules de grande taille. Lorsque les particules réfractaires sont déposées en mélange avec des éléments absorbants tels que ceux mentionnées précédemment, le mélange peut être déposé par sérigraphie. Dans ce cas, les particules réfractaires ont de préférence une taille inférieure à 60 µm pour ne pas obturer les ouvertures de l'écran de sérigraphie. Dans un mode de réalisation préféré, l'étape c comprend le dépôt par sérigraphie d'un mélange comprenant un médium organique, les particules réfractaires et des éléments absorbants, notamment du noir de carbone. Cette technique permet par exemple le dépôt des éléments absorbants sur toute la surface de la feuille de verre (lorsque l'on cherche à homogénéiser la température subie par les différentes zones de la feuille de verre), ou seulement sur la couche d'émail (ce qui permet d'atteindre des teintes noires plus soutenues pour la couche d'émail).

Selon un mode de réalisation, les particules réfractaires sont déposées directement sur la couche d'émail.

### Etape b2

Selon un autre mode de réalisation, le procédé comprend entre l'étape b et l'étape c, le cas échéant entre l'étape b1 et l'étape c, une étape b2 de dépôt, uniquement sur la couche d'émail, d'une couche d'adhésion apte à fixer les particules réfractaires sur la couche d'émail.

La couche d'adhésion permet de fixer temporairement les particules réfractaires à la couche d'émail, et seulement à la couche d'émail. La couche d'adhésion recouvre de préférence la totalité de la couche d'émail.

L'épaisseur de la couche d'adhésion est de préférence comprise entre 5 et 25 µm.

La couche d'adhésion peut également comprendre des éléments absorbants tel que précédemment définis.

De préférence, après l'étape c (dépôt des particules) et avant l'étape d (bombage), le procédé comprend une étape c2 d'élimination, notamment par soufflage, des particules réfractaires autres que celles qui sont fixées par la couche d'adhésion. Les particules qui, lors de l'étape c, ont été déposées sur le revêtement ou sur d'éventuelles zones nonrevêtues de la première feuille de verre, sont alors éliminées avant l'étape de bombage. On évite ainsi tout endommagement du revêtement ou du verre par les particules, par exemple des rayures.

Lorsque la pré-cuisson de la couche d'émail (étape c1) est réalisée entre l'étape c et l'étape d, l'étape c2 est normalement réalisée avant cette étape c1.

La couche d'adhésion est de préférence à base organique, de manière à pouvoir être éliminée soit lors de l'étape d (bombage) soit lors de l'étape c1 (pré-cuisson, lorsqu'elle a lieu après le dépôt des particules).

La couche d'adhésion est de préférence déposée par sérigraphie d'une composition comprenant un médium organique et/ou une résine et/ou un adhésif organique.

La couche d'adhésion est de préférence séchée après le dépôt des particules (étape c) et le cas échéant avant l'étape c2.

Le procédé comprend de préférence, entre l'étape d (bombage) et l'étape e (feuilletage), une étape d1 d'élimination d'au moins une partie, voire de la totalité, des particules réfractaires, permettant d'éviter que les particules ne se retrouvent dans le vitrage feuilleté. L'élimination peut se faire notamment par soufflage ou lavage.

### Etape de pré-cuisson (b1 ou c1)

L'étape de pré-cuisson est de préférence mise en oeuvre à une température comprise entre 150 et 700°C, notamment entre 550 et 680°C.

Une telle pré-cuisson permet d'éliminer le médium organique, ou de manière générale tout composant organique éventuellement présent dans la couche d'émail. Lorsque la pré-cuisson est réalisée après dépôt d'une couche d'adhésion, la pré-cuisson permet également, dans la plupart des cas, d'éliminer cette couche d'adhésion.

Lors de la pré-cuisson, l'empilement de couches minces est au moins partiellement dissout par la couche d'émail. Selon la température employée et le type d'émail ou d'empilement, l'empilement peut même être totalement dissout par la couche d'émail lors de la pré-cuisson. Alternativement, il peut n'être que partiellement dissout lors de la pré-cuisson, et il est alors totalement dissout lors du bombage (étape d).

Selon un mode de réalisation, l'étape de pré-cuisson est réalisée entre l'étape b (dépôt de la couche d'émail) et l'étape c (dépôt des particules réfractaires) . Elle est alors appelée étape b1.

De manière préférée, le procédé de l'invention comprend alors dans l'ordre l'étape a, puis l'étape b (dépôt de la couche d'émail, de préférence par sérigraphie), puis optionnellement une étape de séchage de la couche d'émail, puis l'étape b1 (pré-cuisson), puis optionnellement l'étape b2 de dépôt d'une couche d'adhésion (de préférence par sérigraphie), puis l'étape c de dépôt des particules réfractaires, puis optionnellement une étape de séchage de la couche d'adhésion, puis optionnellement une étape c2 d'élimination des particules réfractaires autres que celles qui sont fixées par la couche d'adhésion, puis l'étape d de bombage, puis optionnellement l'étape d1 d'élimination des particules réfractaires, et enfin l'étape e de feuilletage.

Selon un autre mode de réalisation, l'étape de pré-cuisson est réalisée entre l'étape c (dépôt des particules réfractaires) et l'étape d (bombage). Elle est alors appelée étape c1.

De manière préférée, le procédé de l'invention comprend alors dans l'ordre l'étape a, puis l'étape b (dépôt de la couche d'émail, de préférence par sérigraphie), puis optionnellement une étape de séchage de la couche d'émail, puis optionnellement l'étape b2 de dépôt d'une couche d'adhésion (de préférence par sérigraphie), puis l'étape c de dépôt des particules réfractaires, puis optionnellement une étape de séchage de la couche d'adhésion, puis optionnellement une étape c2 d'élimination des particules réfractaires autres que celles qui sont fixées par la couche d'adhésion, puis l'étape c1 (pré-cuisson), puis l'étape d de bombage, puis optionnellement l'étape d1 d'élimination des particules réfractaires, et enfin l'étape e de feuilletage.

### Etape d

Le bombage peut notamment être réalisé par gravité (le verre se déformant sous son propre poids) ou par pressage, à des températures allant typiquement de 550 à 650°C.

Les feuilles de verre peuvent être maintenues à distance en disposant entre elles une poudre intercalaire assurant un espace de quelques dizaines de micromètres, typiquement de 20 à 50 µm. La poudre intercalaire est par exemple à base de carbonate de calcium et/ou de magnésium.

Lors du bombage, la feuille de verre intérieure (destinée à être positionnée à l'intérieur de l'habitacle), est normalement placée au-dessus de la feuille de verre extérieure. Ainsi, lors de l'étape de bombage, la feuille de verre supplémentaire est placée au-dessus de la première feuille de verre.

De préférence, après l'étape d, la couche d'émail est opaque, de teinte noire. Sa clarté L* mesurée en réflexion côté verre est de préférence inférieure à 5. Comme indiqué précédemment, elle forme avantageusement une bande en périphérie de la première feuille de verre. De la sorte, la couche d'émail est capable de dissimuler et protéger contre le rayonnement ultraviolet des joints, des éléments de connectique, ou encore des capteurs.

Si la couche d'émail n'a pas déjà totalement dissout l'empilement de couches minces à l'issue de la pré-cuisson, cette dissolution totale est obtenue lors du bombage, qui achève la cuisson de l'émail.

La dissolution totale de la couche peut s'observer par microscopie électronique, et se traduit par une couleur plus neutre en réflexion spéculaire, notamment par des coordonnées colorimétriques a* et b* proches de 0, en tout cas inférieures à 5.

### Etape e

L'étape de feuilletage peut être réalisée par un traitement en autoclave, par exemple à des températures de 110 à 160°C et sous une pression allant de 10 à 15 bars. Préalablement au traitement en autoclave, l'air emprisonné entre les feuilles de verre et l'intercalaire de feuilletage peut être éliminé par calandrage ou par dépression.

Comme dit précédemment, la feuille supplémentaire est de préférence la feuille intérieure du vitrage feuilleté, c'est-à-dire la feuille située du côté concave du vitrage, destinée à être positionnée à l'intérieur de l'habitacle du véhicule. De la sorte, les revêtements sont disposés en face 2 du vitrage feuilleté.

La feuille de verre supplémentaire peut être en verre silico-sodo-calcique, ou encore en verre de borosilicate ou d'aluminosilicate. Elle peut être en verre clair ou teinté. Son épaisseur est de préférence comprise entre 0,5 et 4 mm, notamment entre 1 et 3 mm.

Selon un mode de réalisation préféré, la feuille de verre supplémentaire présente une épaisseur comprise entre 0,5 et 1,2 mm. La feuille de verre supplémentaire est notamment en verre d'aluminosilicate de sodium, de préférence renforcé chimiquement. La feuille de verre supplémentaire est de préférence la feuille intérieure du vitrage feuilleté. L'invention est particulièrement utile pour ce type de configuration, pour lequel il est difficile de disposer l'empilement de couches minces en face 3. Le renforcement chimique (aussi appelé « échange ionique ») consiste à mettre en contact la surface du verre avec un sel de potassium fondu (par exemple du nitrate de potassium), de manière à renforcer la surface du verre en échangeant des ions du verre (ici des ions sodium) par des ions de plus grand rayon ionique (ici des ions potassium). Cet échange ionique permet de former des contraintes de compression à la surface du verre et sur une certaine épaisseur. De préférence, la contrainte de surface est d'au moins 300 MPa, notamment 400 et même 500 MPa, et d'au plus 700 MPa, et l'épaisseur de la zone en compression est d'au moins 20 µm, typiquement entre 20 et 50 µm. Le profil de contraintes peut être déterminé de manière connue à l'aide d'un microscope polarisant équipé d'un compensateur de Babinet. L'étape de trempe chimique est de préférence mise en oeuvre à une température allant de 380 à 550°C, et pour une durée allant de 30 minutes à 3 heures. Le renforcement chimique est de préférence réalisé après l'étape de bombage mais avant l'étape de feuilletage. Le vitrage obtenu est de préférence un pare-brise de véhicule automobile, en particulier un pare-brise chauffant.

Selon un autre mode de réalisation préféré, la feuille de verre supplémentaire porte sur la face opposée à la face tournée vers l'intercalaire de feuilletage (de préférence la face 4, la feuille supplémentaire étant la feuille intérieure) un empilement de couches minces supplémentaire, notamment un empilement à faible émissivité, comprenant un oxyde transparent conducteur, notamment l'oxyde d'indium et d'étain (ITO). L'invention est aussi particulièrement utile pour ce type de configuration, pour lequel il est délicat de disposer des empilements de couches minces sur les deux faces de la même feuille de verre (face 3 et 4). Dans ce mode de réalisation, l'intercalaire de feuilletage et/ou la feuille de verre supplémentaire est de préférence teinté(e), la feuille de verre portant les revêtements pouvant être en verre clair. Le vitrage obtenu est de préférence un toit de véhicule automobile.

Comme exemple de ce dernier mode de réalisation préféré, on peut citer un toit bombé feuilleté comprenant, depuis l'extérieur du véhicule, une feuille de verre clair revêtue en face 2 d'un empilement de couches minces comprenant au moins une couche d'argent puis d'une couche d'émail, un intercalaire de feuilletage en PVB teinté, et une feuille de verre supplémentaire en verre teinté, portant en face 4 un empilement de couches minces à faible émissivité, notamment à base d'ITO.

L'intercalaire de feuilletage comprend de préférence au moins une feuille de polyvinylacétal, notamment de polyvinylbutyral (PVB).

L'intercalaire de feuilletage peut être teinté ou non-teinté afin si nécessaire de réguler les propriétés optiques ou thermiques du vitrage.

L'intercalaire de feuilletage peut avantageusement posséder des propriétés d'absorption acoustique afin d'absorber les sons d'origine aérienne ou solidienne. Il peut notamment être constitué à cet effet de trois feuilles polymériques, dont deux feuilles de PVB dites externes encadrant une feuille polymérique interne, éventuellement en PVB, de dureté plus faible que celle des feuilles externes.

L'intercalaire de feuilletage peut également posséder des propriétés d'isolation thermique, en particulier de réflexion du rayonnement infrarouge. Il peut à cet effet comprendre un revêtement de couches mince à faible émissivité, par exemple un revêtement comprenant une couche mince d'argent ou un revêtement alternant des couches diélectriques d'indices de réfractions différents, déposé sur une feuille de PET interne encadrée par deux feuilles de PVB externes.

L'épaisseur de l'intercalaire de feuilletage est généralement comprise dans un domaine allant de 0,3 à 1,5 mm, notamment de 0,5 à 1 mm. L'intercalaire de feuilletage peut présenter une épaisseur plus faible sur un bord du vitrage qu'au centre du vitrage afin d'éviter la formation d'une double image en cas d'utilisation d'un système de vision tête haute, dit HUD (head-up display).

### Exemples

Les exemples de réalisation qui suivent illustrent l'invention de manière non limitative, en lien avec les figures 1 à 4, dans lesquelles :
- [Fig.1] illustre de manière schématique un mode de réalisation du procédé selon l'invention.
- [Fig.2] illustre de manière schématique un autre mode de réalisation du procédé selon l'invention.
- [Fig.3] illustre de manière schématique un autre mode de réalisation du procédé selon l'invention.
- [Fig.4] illustre de manière schématique un autre mode de réalisation du procédé selon l'invention.

Ces figures représentent une coupe schématique d'une partie des feuilles de verre et des éléments déposés sur les feuilles de verre, près de la périphérie de ces dernières. Les divers éléments ne sont évidemment pas représentés à l'échelle, de manière à pouvoir les visualiser.

La première feuille de verre 10 revêtue de l'empilement de couches minces 12 est fournie dans l'étape a, puis une partie de l'empilement 12 est revêtue par une couche d'émail 14, notamment par sérigraphie (étape b).

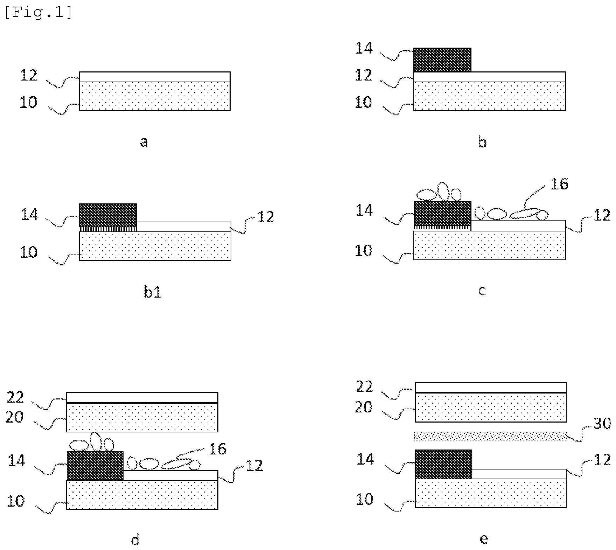

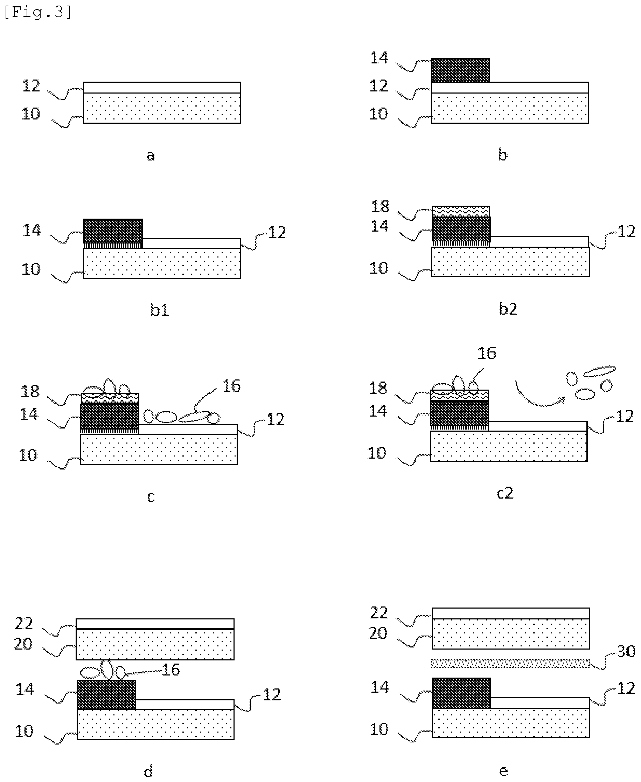

Dans le mode de réalisation des figures 1 et 3, l'ensemble subit ensuite une pré-cuisson (étape b1), qui dans le cas représenté, conduit à une dissolution partielle de l'empilement 12 par l'émail 14.

Dans le mode de réalisation de la figure 1, des particules réfractaires 16 sont ensuite déposées sur la couche d'émail 14 et sur l'empilement 12 (étape c).

Une feuille de verre supplémentaire 20, ici munie d'un empilement de couches minces supplémentaire 22, est ensuite posée sur la première feuille de verre 10, l'ensemble étant ensuite bombé (étape d). La vue représentée n'étant que celle de l'extrémité de la feuille de verre, le bombage n'est ici pas représenté. Le schéma illustre le fait qu'à l'issue du bombage, l'émail 14 a totalement dissout l'empilement de couches minces 12 sous-jacent.

Dans l'étape e, la première feuille de verre 10 revêtue de l'empilement de couches minces 12 et de la couche d'émail 14 et la feuille de verre supplémentaire 20 revêtue de l'empilement supplémentaire 22 sont assemblés à l'aide de l'intercalaire de feuilletage 30. Le schéma représente ici chacun des éléments séparés, en vue éclatée. Les particules 16 ont auparavant été éliminées lors d'une étape d1 non-représentée.

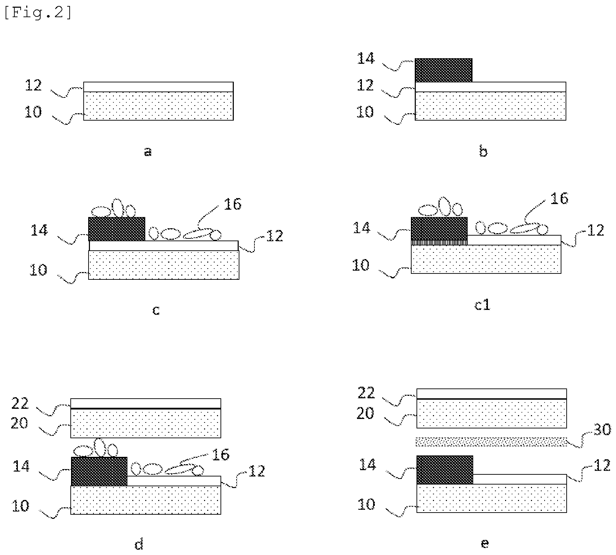

Le mode de réalisation de la Figure 2 se distingue de celui de la Figure 1 en ce que l'étape de pré-cuisson (étape c1) est réalisée après l'étape c de dépôt des particules réfractaires 16, et avant l'étape d de bombage.

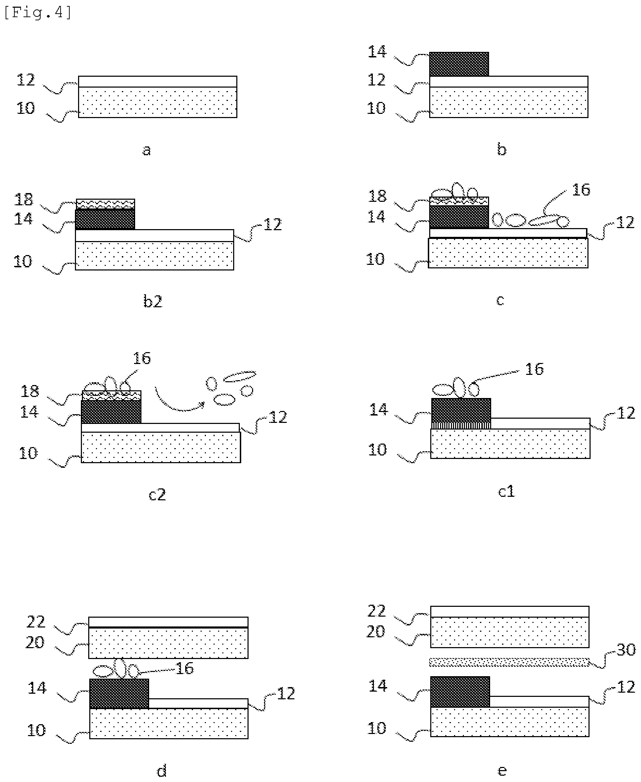

Les modes de réalisation des Figures 3 et 4 ajoutent une étape b2 de dépôt d'une couche adhésive 18 ainsi qu'une étape c2 d'élimination des particules réfractaires 16 autres que celles fixées à la couche d'émail 14. Ainsi, lors de l'étape c, les particules 16 déposées sur la couche d'émail 14 sont fixées à cette dernière et, lors de l'étape d de bombage, seules les particules 16 fixées à la couche d'émail 14 sont présentes.

Le mode de réalisation de la Figure 4 se distingue de celui de la Figure 3 en ce que l'étape de pré-cuisson (étape c1) est réalisée après l'étape c de dépôt des particules réfractaires 16, et avant l'étape d de bombage.

### Exemple 1

Le procédé mis en oeuvre par l'exemple 1 correspond au mode de réalisation de la Figure 1.

Des feuilles de verre de 2,1 mm d'épaisseur, préalablement revêtues par pulvérisation cathodique d'un empilement de couches minces comprenant deux couches d'argent protégées par des couches d'oxyde de zinc, des couches de nitrure de silicium et des bloqueurs NiCr, ont été revêtues par sérigraphie de couches d'émail d'une épaisseur humide de 25 µm.

Après séchage (150°C, 1 à 2 minutes) puis pré-cuisson à 630°C, des particules ont été dispersées sur toute la surface de la première feuille de verre, et notamment sur la couche d'émail pré-cuite.

Ces particules étaient à base de silicate de magnésium, obtenues par broyage de fibres commercialisées sous la référence Isofrax^{®} 1260C. Les particules obtenues présentaient un diamètre inférieur à 50 µm et une longueur d'au moins 1 mm.

Après appairage avec une feuille de verre supplémentaire en verre silico-sodo-calcique muni en face 4 d'un empilement comprenant une couche d'ITO, l'ensemble a été bombé à plus de 600°C pendant 350 à 500 secondes. Après lavage pour éliminer les particules réfractaires, les deux feuilles de verre ont été feuilletées ensemble au moyen d'un intercalaire en PVB.

Après cuisson, l'esthétique, plus particulièrement la couleur noire vue depuis la face 1, a été évaluée par la mesure de la clarté L* en réflexion (illuminant D65, observateur de référence 10°). Une valeur inférieure à 5 est considérée comme acceptable. Le collage a quant à lui été évalué qualitativement par observation visuelle.

La valeur de L* était inférieure à 4,8 pour une température de bombage supérieure à 628°C, et de 3,6 pour une température de bombage de 651°C. Aucun collage n'a été observé jusqu'à une température de bombage de 651°C.

### Exemple 2

Le procédé mis en oeuvre par l'exemple 2 correspond au mode de réalisation de la Figure 3.

Dans l'étape b2, une résine (médium Ferro 80-007) a été déposée par sérigraphie sur la couche d'émail, avec une épaisseur humide de 10 à 15 µm. La couche adhésive ainsi obtenue a ensuite été séchée à environ 150°C pendant 1 à 2 minutes afin d'éliminer le solvant. Les particules réfractaires non fixées à l'émail par la couche adhésive ont ensuite été éliminées par soufflage d'air. Les autres étapes ont été réalisées de la même manière que pour l'exemple 1.

Les mêmes résultats en termes d'esthétique et d'absence de collage que pour l'exemple 1 ont été obtenus. En revanche, aucune rayure n'a été observée sur l'empilement de couches minces, contrairement à l'exemple 1.

### Exemple 3

Le procédé mis en oeuvre par l'exemple 3 correspond au mode de réalisation de la Figure 4. La seule différence par rapport à l'exemple 2 a donc été l'ordre des étapes, les particules ayant été déposées sur une couche d'émail seulement séchée, la pré-cuisson ayant été réalisée juste avant le bombage.

Les mêmes résultats en termes d'esthétique et d'absence de collage que pour l'exemple 2 ont été obtenus. De même, aucune rayure n'a été observée sur l'empilement de couches minces, contrairement à l'exemple 1.

### Exemple comparatif C1

Dans cet exemple, et par rapport à l'exemple 1, le dépôt de particules réfractaires a été remplacé par le dépôt par sérigraphie de 25 µm d'un émail au bismuth présentant des propriétés antiadhésives.

Un collage a toutefois observé, et en outre la valeur de L* était supérieure à 5 pour toutes les températures de bombage étudiées.

### Exemple comparatif C2

Dans cet exemple, et par rapport à l'exemple 1, le dépôt de particules réfractaires a été remplacé par le dépôt de pigments noirs ayant une taille inférieure à 20 µm.

Si aucun collage n'a été observé, la valeur de L* était d'au moins 12,4 (valeur observée pour une température de bombage de 650°C).

### Exemple comparatif C3

Dans cet exemple, et par rapport à l'exemple 1, le dépôt de particules réfractaires a été remplacé par le dépôt de pigments blancs ayant une taille inférieure à 20 µm.

Si aucun collage n'a été observé, la valeur de L* était d'au moins 20.

### Exemple comparatif C4

Dans cet exemple, et par rapport à l'exemple 1, le dépôt de particules réfractaires a été remplacé par le dépôt par sérigraphie d'une couche sol-gel de silice (produit TLU0059 de Ferro).

L'esthétique était satisfaisante (L*<5, notamment de 3,3 pour une température de bombage de 654°C), mais un collage a été observé.

### Exemple comparatif C5

Dans cet exemple, et par rapport à l'exemple 1, le dépôt de particules réfractaires a été remplacé par le dépôt par sérigraphie d'une solution à base de silicate alcalin comprenant en outre des pigments noirs.

La valeur de L* était de 16 pour une température de bombage de 650°C, et un transfert de la couche de silicate sur la feuille de verre supplémentaire a été observé.

### Exemple comparatif C6

Dans cet exemple, et par rapport à l'exemple 1, le dépôt de particules réfractaires a été remplacé par le dépôt par sérigraphie de 25 µm d'un émail au bismuth, commercialisé sous la référence 14316 par la société Ferro, connu pour ses propriétés antiadhésives. Contrairement à l'exemple C1, un deuxième traitement de pré-cuisson a été réalisé après dépôt de cet émail.

Un collage a toutefois observé, et en outre la valeur de L* était de 8,9 pour une température de bombage de 650°C.

## Revendications

1. Procédé d'obtention d'un vitrage bombé feuilleté, notamment pour pare-brise ou toit de véhicule automobile, comprenant les étapes suivantes :
a. la fourniture d'une première feuille de verre (10), revêtue sur au moins une partie d'une de ses faces d'un empilement de couches minces (12),
b. une étape de dépôt, sur une partie de la surface de l'empilement de couches minces (12), d'une couche d'émail (14),
c. une étape de dépôt, au moins sur ladite couche d'émail (14), de particules réfractaires (16) à base d'oxydes, de carbures ou de métaux, dont au moins une dimension est supérieure ou égale à 30 µm,
d. une étape de bombage simultané de la première feuille de verre (10) avec une feuille de verre supplémentaire (20), la couche d'émail (14) étant tournée vers ladite feuille de verre supplémentaire (20),
e. une étape de feuilletage de ladite première feuille de verre (10) avec la feuille de verre supplémentaire (20) au moyen d'un intercalaire de feuilletage (30), de sorte que la couche d'émail (14) soit tournée vers ledit intercalaire (30),
ledit procédé comprenant en outre une étape de pré-cuisson de la couche d'émail (14) durant laquelle l'empilement de couches minces (12) situé sous la couche d'émail (14) est au moins partiellement dissout par ladite couche d'émail (14), ladite étape de pré-cuisson étant soit une étape appelée b1 et réalisée entre l'étape b et l'étape c, soit une étape appelée c1 et réalisée entre l'étape c et l'étape d, l'empilement de couches minces (12) situé sous la couche d'émail (14) étant totalement dissout par ladite couche d'émail (14) au moins à l'issue de l'étape d.

2. Procédé selon la revendication 1, tel que l'empilement de couches minces (12) comprend au moins une couche fonctionnelle, notamment une couche fonctionnelle électro-conductrice, en particulier choisie parmi les couches métalliques, notamment en argent ou en niobium, et les couches d'un oxyde transparent conducteur, notamment choisi parmi l'oxyde d'indium et d'étain, les oxydes d'étain dopés, les oxydes de zinc dopés.

3. Procédé selon l'une des revendications précédentes, tel qu'après l'étape d, la couche d'émail (14) est opaque, de teinte noire, et forme une bande en périphérie de la première feuille de verre (10).

4. Procédé selon l'une des revendications précédentes, dans lequel les particules réfractaires (16) sont à base d'oxydes choisis parmi les oxydes métalliques simples, notamment l'oxyde de l'aluminium, de titane ou de zirconium, et les oxydes complexes, notamment des silicates, des frittes de verre ou de vitrocéramique à haut point de fusion ou des pigments inorganiques.

5. Procédé selon l'une des revendications précédentes, dans lequel les particules réfractaires (16) présentent au moins une dimension supérieure ou égale à 40 µm, notamment supérieure ou égale à 60 µm.

6. Procédé selon l'une des revendications précédentes, dans lequel les particules réfractaires (16) sont allongées, notamment de nature fibreuse, et présentent un rapport longueur/diamètre supérieur à 3, notamment supérieur à 10.

7. Procédé selon l'une des revendications précédentes, dans lequel la quantité de particules ayant au moins une dimension supérieure ou égale à 30 µm est d'au moins 0,1 g/m², notamment d'au moins 0,5 g/m².

8. Procédé selon l'une des revendications précédentes, dans lequel les particules réfractaires (16) sont déposées en mélange avec des éléments absorbant le rayonnement infrarouge, notamment choisis parmi une résine, des pigments ou du noir de carbone.

9. Procédé selon l'une des revendications précédentes, dans lequel les particules réfractaires (16) sont déposées sur la couche d'émail (14) et sur les zones de la première feuille de verre (10) à proximité de la couche d'émail (14).

10. Procédé selon l'une des revendications précédentes, comprenant entre l'étape b et l'étape c, le cas échéant entre l'étape b1 et l'étape c, une étape b2 de dépôt, uniquement sur la couche d'émail (14), d'une couche d'adhésion (18) apte à fixer les particules réfractaires (16) sur la couche d'émail (14).

11. Procédé selon la revendication précédente, comprenant en outre, après l'étape c et avant l'étape d, une étape c2 d'élimination, notamment par soufflage, des particules réfractaires (16) autres que celles qui sont fixées par la couche d'adhésion (18).

12. Procédé selon l'une des revendications précédentes, comprenant en outre, entre l'étape d et l'étape e une étape d1 d'élimination des particules réfractaires (16) .

13. Procédé selon l'une des revendications précédentes, dans lequel la feuille de verre supplémentaire (20) présente une épaisseur comprise entre 0,5 et 1,2 mm, notamment est en verre d'aluminosilicate de sodium renforcé chimiquement.

14. Procédé selon l'une des revendications 1 à 12, dans lequel la feuille de verre supplémentaire (20) porte, sur la face opposée à la face tournée vers l'intercalaire de feuilletage (30), un empilement de couches minces supplémentaire (22), notamment un empilement à faible émissivité comprenant un oxyde transparent conducteur.

15. Vitrage bombé feuilleté, notamment pour pare-brise ou toit de véhicule automobile, susceptible d'être obtenu par le procédé de l'une des revendications précédentes.

## Patentansprüche

1. Verfahren zum Herstellen einer gewölbten Verbundverglasung, insbesondere für eine Windschutzscheibe oder ein Dach eines Kraftfahrzeugs, umfassend die folgenden Schritte:
a. Bereitstellen einer ersten Glasscheibe (10), die auf mindestens einem Teil einer ihrer Flächen mit einem Dünnschichtstapel (12) beschichtet ist,
b. einen Schritt eines Aufbringens einer Emailschicht (14) auf einen Teil der Oberfläche des Dünnschichtstapels (12),
c. einen Schritt des Aufbringens von feuerfesten Partikeln (16) auf der Basis von Oxiden, Carbiden oder Metallen, von denen mindestens eine Abmessung größer als oder gleich 30 µm ist, mindestens auf der Emailschicht (14),
d. einen Schritt eines gleichzeitigen Krümmens der ersten Glasscheibe (10) mit einer zusätzlichen Glasscheibe (20), wobei die Emailschicht (14) der zusätzlichen Glasscheibe (20) zugewandt ist,
e. einen Schritt eines Laminierens der ersten Glasscheibe (10) mit der zusätzlichen Glasscheibe (20) mittels einer Verbundzwischenlage (30), sodass die Emailschicht (14) der Zwischenlage (30) zugewandt ist,
das Verfahren ferner umfassend einen Schritt eines Vorbrennens der Emailschicht (14), während dessen der unter der Emailschicht (14) befindliche Dünnschichtstapel (12) durch die Emailschicht (14) mindestens teilweise aufgelöst wird, wobei der Vorbrennschritt entweder ein Schritt, der als b1 bezeichnet wird und zwischen Schritt b und Schritt c durchgeführt wird, oder ein Schritt, der als cl bezeichnet wird und zwischen Schritt c und Schritt d durchgeführt wird, ist, wobei der unter der Emailschicht (14) befindliche Dünnschichtstapel (12) mindestens am Ende von Schritt d durch die Emailschicht (14) vollständig aufgelöst wird.

2. Verfahren nach Anspruch 1, wobei der Dünnschichtstapel (12) mindestens eine Funktionsschicht, insbesondere eine elektrisch leitfähige Funktionsschicht, die insbesondere aus Metallschichten, insbesondere aus Silber oder aus Niob, ausgewählt ist, und Schichten aus einem transparenten leitfähigen Oxid, das insbesondere aus Indium- und Zinnoxid, dotierten Zinnoxiden, dotierten Zinkoxiden ausgewählt ist, umfasst.

3. Verfahren nach einem der vorstehenden Ansprüche, wobei nach Schritt d die Emailschicht (14) undurchsichtig ist, einen schwarzen Farbton besitzt und einen Streifen am Rand der ersten Glasscheibe (10) ausbildet.

4. Verfahren nach einem der vorstehenden Ansprüche, wobei die feuerfesten Partikel (16) auf Oxiden basieren, die aus einfachen Metalloxiden, insbesondere Aluminium-, Titan- oder Zirkoniumoxid, und komplexen Oxiden, insbesondere Silikaten, Glas- oder Glaskeramikfritten mit hohem Schmelzpunkt oder anorganischen Pigmenten, ausgewählt sind.

5. Verfahren nach einem der vorstehenden Ansprüche, wobei die feuerfesten Partikel (16) mindestens eine Abmessung, die größer als oder gleich 40 µm, insbesondere größer als oder gleich 60 µm, ist, aufweisen.

6. Verfahren nach einem der vorstehenden Ansprüche, wobei die feuerfesten Partikel (16) länglich sind, insbesondere faserartiger Natur, und ein Verhältnis Länge/Durchmesser von größer als 3, insbesondere größer als 10, aufweisen.

7. Verfahren nach einem der vorstehenden Ansprüche, wobei die Menge der Partikel, die mindestens eine Abmessung von größer als oder gleich 30 µm besitzen, mindestens 0,1 g/m², insbesondere mindestens 0,5 g/m², beträgt.

8. Verfahren nach einem der vorstehenden Ansprüche, wobei die feuerfesten Partikel (16) in Mischung mit Infrarotstrahlung absorbierenden Elementen aufgebracht werden, die insbesondere aus einem Harz, Pigmenten oder Ruß ausgewählt sind.

9. Verfahren nach einem der vorstehenden Ansprüche, wobei die feuerfesten Partikel (16) auf die Emailschicht (14) und auf die Bereiche der ersten Glasscheibe (10) in der Nähe der Emailschicht (14) aufgebracht werden.

10. Verfahren nach einem der vorstehenden Ansprüche, umfassend zwischen Schritt b und Schritt c, gegebenenfalls zwischen Schritt b1 und Schritt c, einen Schritt b2 zum Aufbringen, nur auf die Emailschicht (14), einer Haftschicht (18), die geeignet ist, die feuerfesten Partikel (16) auf der Emailschicht (14) zu fixieren.

11. Verfahren nach dem vorstehenden Anspruch, ferner umfassend nach Schritt c und vor Schritt d einen Schritt c2 zum Entfernen, insbesondere durch Blasen, von feuerfesten Partikeln (16), außer denen, die durch die Haftschicht (18) fixiert sind.

12. Verfahren nach einem der vorstehenden Ansprüche, ferner umfassend zwischen Schritt d und Schritt e einen Schritt d1 zum Entfernen von feuerfesten Partikeln (16).

13. Verfahren nach einem der vorstehenden Ansprüche, wobei die zusätzliche Glasscheibe (20) eine Dicke zwischen 0,5 und 1,2 mm aufweist, insbesondere aus chemisch verstärktem Natriumaluminiumsilikatglas besteht.

14. Verfahren nach einem der Ansprüche 1 bis 12, wobei die zusätzliche Glasscheibe (20) auf der Seite, die der der Verbundzwischenlage (30) zugewandten Seite gegenüberliegt, einen zusätzlichen Dünnschichtstapel (22) trägt, insbesondere einen Stapel mit niedriger Emissivität, umfassend ein leitfähiges transparentes Oxid.

15. Gewölbte Verbundverglasung, insbesondere für eine Windschutzscheibe oder ein Dach eines Kraftfahrzeugs, die durch das Verfahren nach einem der vorstehenden Ansprüche hergestellt werden kann.

## Claims

1. A method for obtaining a laminated curved glazing, particularly for a motor vehicle windscreen or roof, comprising the following steps:
a. providing a first glass sheet (10), coated on at least part of one of the faces thereof with a stack of thin layers (12),
b. a step of depositing, on part of the surface of the stack of thin layers (12), an enamel layer (14),
c. a step of depositing, at least on said enamel layer (14), refractory particles (16) based on oxides, carbides or metals, at least one dimension of which is greater than or equal to 30 µm,
d. a step of simultaneously bending the first glass sheet (10) and the additional glass sheet (20), with the enamel layer (14) facing said additional glass sheet (20),
e. a step of laminating said first glass sheet (10) with the additional glass sheet (20) by means of a lamination interlayer (30), such that the enamel layer (14) is facing said interlayer (30),
said method further comprising a step of pre-firing the enamel layer (14) during which the stack of thin layers (12) located under the enamel layer (14) is at least partially dissolved by said enamel layer (14), said pre-firing step being either a step called b1 and performed between step b and step c or a step called c1 and carried out between step c and step d, the stack of thin layers (12) located under the enamel layer (14) being completely dissolved by said enamel layer (14) at least by the end of step d.

2. The method according to claim 1, such that the stack of thin layers (12) comprises at least one functional layer, particularly an electrically conductive functional layer, in particular selected from metal layers, particularly silver or niobium layers, and layers of a transparent conductive oxide, particularly selected from indium tin oxide, doped tin oxides and doped zinc oxides.

3. The method according to one of the preceding claims, such that after step d, the enamel layer (14) is opaque, has a black hue, and forms a strip at the periphery of the first glass sheet (10).

4. The method according to one of the preceding claims, in which the refractory particles (16) are based on oxides selected from simple metal oxides, particularly aluminum, titanium or zirconium oxide, and complex oxides, in particular silicates, high-melting glass or glass-ceramic frits, or inorganic pigments.

5. The method according to one of the preceding claims, wherein the refractory particles (16) have at least one dimension greater than or equal to 40 µm, particularly greater than or equal to 60 µm.

6. The method according to one of the preceding claims, in which the refractory particles (16) are elongated, particularly of a fibrous nature, and have a length/diameter ratio greater than 3, particularly greater than 10.

7. The method according to one of the preceding claims, wherein the amount of particles having at least one dimension greater than or equal to 30 µm is at least 0.1 g/m², particularly at least 0.5 g/m².

8. The method according to one of the preceding claims, wherein the refractory particles (16) are deposited in a mixture with infrared radiation absorbent elements, particularly chosen from a resin, pigments or carbon black.

9. The method according to one of the preceding claims, wherein the refractory particles (16) are deposited on the enamel layer (14) and on the areas of the first glass sheet (10) near the enamel layer (14).

10. The method according to one of the preceding claims, comprising between step b and step c, if necessary between step b1 and step c, a step b2 of depositing, solely on the enamel layer (14), an adhesion layer (18) capable of fixing the refractory particles (16) onto the enamel layer (14).

11. The method according to the preceding claim, further comprising, after step c and before step d, a step c2 of removing, in particular by blowing, refractory particles (16) other than those fixed by the adhesion layer (18).

12. The method according to one of the preceding claims, further comprising, between step d and step e a step d1 of removing the refractory particles (16).

13. The method according to one of the preceding claims, wherein the additional glass sheet (20) has a thickness of between 0.5 and 1.2 mm, particularly is made of chemically reinforced sodium aluminosilicate glass.

14. The method according to one of claims 1 to 12, wherein the additional glass sheet (20) carries, on the face opposite the face facing the lamination interlayer (30), an additional stack of thin layers (22), particularly a low-emissivity stack comprising a transparent conductive oxide.

15. A laminated curved glazing, particularly for a motor vehicle windscreen or roof, capable of being obtained by the method of one of the preceding claims.
